# EUROPÄISCHE PATENTANMELDUNG

(11) **EP 3 643 771 A1**
(43) Veröffentlichungstag der Anmeldung: **29.04.2020**
(21) Anmeldenummer: 18000830.2
(22) Anmeldetag: 25.10.2018
(51) Int. Cl.: C11B 1/10, C11B 13/00

(54) **ZUCKERROHRWACHS (ZRW) AUS JAGGERY**

(71) Anmelder: Hufschmid Diana Wachs Chemie Elsteraue e.K., 80638 München (DE)
(72) Erfinder: Hufschmid Diana Wachs Chemie Elsteraue e.K., 80638 München (DE)

(57) **Zusammenfassung**

Ein essbares Zuckerrohrwachs (ZRW) wird aus dem Lebensmittel Jaggery unter Zuhilfenahme von Wasserdampf hergestellt.

Bei der Erfindung Zuckerrohrwachs (ZRW) aus dem in Indien als Lebensmittel verwendetem Jaggery handelt es sich um ein Herstellverfahren für das Zuckerrohrwachs aus dem Lebensmittel Jaggery unter Zuhilfenahme von Wasserdampf als einzigem Lösemittel

## Beschreibung

### Zusammenfassung

Ein essbares ZRW wird aus dem Lebensmittel Jaggery unter Zuhilfenahme von Wasserdampf hergestellt.

### Stand der Technik Jaggery- und Zuckerherstellung

### Jaggery Herstellung:

Nach der Zuckerrohrernte wird die entlaubte Zuckerrohrpflanze gereinigt und mit Brechern klein geschnitten. Dabei ist es egal woher die Zuckerrohrpflanze kommt, ob aus Afrika, Südamerika oder aus Asien. Diese Brecher werden auf Feldern in der Nähe der Zuckerrohrpflanzen platziert. Das geschnittene und gereinigte Zuckerrohr wird weiter zerkleinert und mit Wasser extrahiert. Dabei entsteht ein Zuckerrohrsaft, der in großen Gefäßen gesammelt wird.

Diese zuckerige Flüssigkeit, die auch alle faserigen Bestandteile der Zuckerrohrpflanze enthält, wird nun einige Stunde erhitzt und bis zu 200°C erwärmt. Dabei verdunstet das Wasser und es entsteht getrockneter, faseriger Lignin- oder Holzstoff, der auch als zerkleinerter Zellstoff oder Holzpulpe bezeichnet werden kann.

Während der Saft eingekocht und immer dickflüssiger wird gibt man "Kalk" hinzu, so dass alle Holz- und Lignin Partikel in einem Schaum an der Flüssigkeitsoberfläche aufrahmen. Dieser Rahm oder Schaum, der sich nun an der Oberfläche des Saftes befindet, kann nun abgeschöpft werden. Das so abgetrennte Material wird bisher traditionell ausschließlich als Brennstoff oder als Düngemittel verwendet.

Als Brennstoff wird es in der vollständig getrockneten Form benutzt und da das daraus gewonnene Wachs nach DIN EN 13432 biologisch abbaubar ist, kann es ohne Umweltprobleme zu generieren nach dem Abschöpfprozess wieder mit Wasser verdünnt werden und als Düngemittel auf die Felder ausgebracht werden.

Der eingedickte Zuckersaft wird als Jaggery seit Jahrtausenden so hergestellt und als Lebensmittel verkauft. Das so hergestellte Jaggery kann auch als unraffinierter' Zucker bezeichnet werden und wird in ganz Süd- und Südostasien verzehrt und verkauft.

Jaggery wird als Süßungsmittel sowohl in süßen als auch herzhaften Gerichten in Indien und Sri Lanka genutzt. Zum Beispiel findet Jaggery in den südindischen Soßen Sambar und Rasam Verwendung und wird zuweilen auch dem nordischen Dal als Süßungsmittel hinzugefügt. Des Weiteren wir Jaggery als Süßigkeit, beispielsweise pur ohne weitere Zusätze verwendet. Als Toffee oder zur Herstellung von Kuchen. Außerdem kommt Jaggery bei der Zubereitung mancher Spirituosen zum Einsatz. Darüber hinaus wird Jaggery in Teilen Indiens als glückverheißend angesehen und zu besonderen Anlässen seit Jahrhunderten verzehrt.

In Myanmar wird Jaggery, Htanyet genannt und traditionell am Abend mit einer Tasse grünen Tee zum versüßen des Getränkes genommen. Örtlich wird es auch als Burmese-Schokolade bezeichnet. Jaggery wird in Myanmar auch mit Kokosnuss, Zwetschge oder Sesam gemischt und findet sich in der landestypischen Küche als Versüßungsmittel wieder.

Neben der Verwendung als Speise wird Jaggery auch zum Würzen des Tandur-Ofens benutzt.

Hauptproduzent von Jaggery ist Indien.

### Industrielle Zuckerherstellung:

Bei der industriellen Zuckerherstellung wird ebenfalls so verfahren. Die zerkleinerte Zuckerrohrpflanze wird mit Wasser aufgenommen und in diversen Absetzbecken gereinigt und dabei kristallisieren die Zuckerkristalle aus. Auch hier werden am Ende der Zuckerherstellung die festen Bestandteile wie Lignin- und Holzfasern in einem Trommelfilter abgetrennt. Aus den abgetrennten festen Bestandteilen wird in einem zusätzlichen Herstellungsschritt das Zuckerrohwachs hergestellt.

### Kritik am Stand der Technik

Es wurde anscheinend nie geprüft, ob aus diesem Brennstoff bzw. Düngemittel noch andere wertvolle Produkte hergestellt werden könnten.

Es wurde völlig überraschend gefunden, dass dieser Brennstoff / Düngemittel auch noch bis zu 10 % ZRW enthält. Dieses Wachs kann leicht mit Wasserdampf abgetrennt und als essbares Wachs verwendet werden.

### Herstellung

Nachdem die Zuckerrohrpflanze geerntet wird, wird sie mit mechanischen Brechern auf eine Teilchengröße < 1 cm zerkleinert und Wasser zugegeben. Diese Flüssigkeit wird nun 60 Minuten auf 90°C erhitzt. Dabei entsteht der eingedickte faserige Zellstoff / Holzpulpe indem auch das geschmolzene Wachs enthalten ist. Nach der Zugabe von "Lime/Kalk" bildet sich ein Schaum auf der Flüssigkeitsoberfläche. Dieser Schaum kann abgeschöpft werden.

Mit bis zu 250°C heißem Wasserdampf wird das Wachs als sehr dünnflüssiges Wachs von den übrigen Bestandteilen wir Lignin- und Holzstoff mittels einer einfachen Filtration abgetrennt. Nach der heiß bei ca. 120°C durchgeführten Filtration schwimmt das Wachs im Filtrat auf der Wasseroberfläche. Diese ölige Schicht aus ZRW kann nun als flüssiges Wachs abgeschöpft werden, oder man erntet das Wachs als Feststoff, wenn sich das Filtrat abgekühlt hat.

Die besseren Zuckerrohwachsqualitäten erhält man bei einer heißen Abfüllung. Dabei kann das flüssige Wachs in Platten zur Abkühlung gegossen werden, oder man sprüht das Wachs zu einer Pulver- oder Pulver fein Qualität. Auch mittels eines Kühlbandes ist ein Tropfgranulat herstellbar.

Den Filterkuchen kann man nun wieder der thermischen Verwertung zuführen.

### Technische Daten des Zuckerrohrwachses

| Aussehen | hellgelb - braun |
|---|---|
| Tropfpunkt | 65 - 87 °C |
| Säurezahl | < 30 |
| Jodzahl | < 10 |

## Patentansprüche

1. Bei der Herstellung von Jaggery, dem unraffinierten Zucker aus der Zuckerrohrpflanze, kann aus dem Brennstoff und Düngemittel, der bei der Jaggery Herstellung als Abfallprodukt anfällt, ein sehr reines und essbares ZRW gewonnen werden.

2. Für die Herstellung des nach Anspruch 1 gewonnenen Zuckerrohrwachses wird als Lösemittel Wasser und überhitzter Wasserdampf verwendet.

3. Für die Herstellung des nach Anspruch 1 gewonnenen Zuckerrohrwachses können als Lösemittel Wasser in Kombination mit heißem Wasserdampf bis zu einer Temperatur von 250°C verwendet.

4. Für die Herstellung des nach Anspruch 1 gewonnenen Zuckerrohrwachses können als Lösemittel auch aliphatische Kohlenwasserstoffe verwendet werden.

5. Für die Herstellung des nach Anspruch 1 gewonnenen Zuckerrohrwachses können als Lösemittel auch cyclische Kohlenwasserstoffe verwendet werden.

6. Das nach den Ansprüchen 1-5 gewonnene essbare Zuckerrohrwachs kann mit allen anderen natürlichen und synthetischen Wachsen in allen Mischungsverhältnissen gemischt werden.

7. Das nach den Ansprüchen 1-5 gewonnene Zuckerrohrwachs kann mit Paraffinen, niedermolekularen Paraffinen und Ölen in allen Mischungsverhältnissen gemischt werden.

8. Das nach den Ansprüchen 1 - 5 gewonnene essbare Zuckerrohrwachs kann unter Zuhilfenahme von FDA zugelassenen Emulgatoren auch als flüssige Emulsion oder Dispersion erhalten werden.
